# EUROPÄISCHE PATENTSCHRIFT

(11) **EP 1 091 992 B1**
(45) Veröffentlichungstag und Bekanntmachung des Hinweises auf die Patenterteilung: **03.12.2003**
(21) Anmeldenummer: 99957171.4
(22) Anmeldetag: 25.06.1999
(51) Int. Cl.: C08G 59/32, C08G 59/42

(54) **HARZSYSTEM**
RESIN SYSTEM
SYSTEME RESINE

(30) Priorität: 25.06.1998 DE 19828248
(43) Veröffentlichungstag der Anmeldung: 18.04.2001
(73) Patentinhaber: ABB Schweiz AG, 5400 Baden (CH)
(72) Erfinder: VOHWINKEL, Friedrich, D-49492 Westerkappeln (DE); FOERSTER, Stefan, CH-8152 Opfikon (CH); ROCKS, Jens, CH-5408 Ennetbaden (CH)
(74) Vertreter: ABB Patent Attorneys
(86) Internationale Anmeldenummer: CH9900275
(87) Internationale Veröffentlichungsnummer: WO99067315

(56) Entgegenhaltungen:
- EP-A- 0 456 603
- WO-A-85/05215
- DE-B- 1 019 083
- US-A- 3 683 044
- US-A- 4 002 599
- CHEMICAL ABSTRACTS, vol. 86, no. 14, 14. April 1977 (1977-04-14) Columbus, Ohio, US; abstract no. 90971v, NAKAHARA ET AL: "Curable epoxy resin composition" Seite 57; Spalte 2; XP002117207 & JP 05 111897 A (HITACHI CHEMICAL) 30. Januar 1976 (1976-01-30)
- GUERRERO ET AL: "Influence of cure schedule and stoichiometry on the dynamic mechanical behaviour of tetrafunctional epoxy resins cured with anhydrides" POLYMER, Bd. 37, Nr. 11, 1996, Seiten 2195-2200, XP000590084 UK

## Beschreibung

### Technisches Gebiet

Die vorliegende Erfindung betrifft ein Harzsystem gemäss dem Oberbegriff des Anspruchs 1, ein Verfahren zur Herstellung eines isolierten elektrischen Leiters gemäss dem Oberbegriff des Anspruchs 14, einen nach dem Verfahren hergestellten isolierten elektrischen Leiter sowie einen Giessharzkörper und eine Beschichtung, jeweils mit dem Harzsystem.

### Technologischer Hintergrund und Stand der Technik

Epoxidharze gehören zu den vielseitigsten polymeren Werkstoffen. Sie finden Anwendungen z.B. als Beschichtungen, Klebstoffe, Gießharzmassen, Formmassen, als Einbettmassen zur Umhüllung elektronischer Bauteile, als Laminate und Basismaterial für gedruckte Schaltungen sowie als Matrixharze für faserverstärkte Kunststoffe.

Die Überführung von monomeren oder oligomeren Epoxidharzen in polymere Stoffe erfordert Reaktionspartner, die man als Härter oder Härtungsmittel bezeichnet. Je nach Typ des Härters erfolgt die Härtungsreaktion bei Temperaturen um Raumtemperatur oder niedrigen Temperaturen (sogenannte "Kalthärtung") oder bei erhöhten Temperaturen (sogenannte "Warm- oder Heißhärtung").

Zur Härtung von Epoxidharzen bei niedrigen Temperaturen für technische Anwendungen werden vorwiegend nur aliphatische primäre oder sekundäre Amine und Polyaminoamide eingesetzt, seltener dagegen Polythiole oder spezielle ionische Katalysatoren. Alle unmodifizierten Amine reagieren alkalisch bis stark alkalisch. Flüssige Amine, insbesondere die aliphatischen und cycloaliphatischen, können Hautschädigungen bis zur Verätzung verursachen. Nachteilig ist auch die hohe Flüchtigkeit der flüssigen Amine. Ein großer Nachteil der Kalthärtung von Epoxidharzen mit den oben erwähnten Härtungsmitteln ist die geringe Temperatur- und Chemikalienbeständigkeit der entstehenden Produkte.

Zur Erhöhung der Temperatur-, Lösemittel- und Chemikalienbeständigkeit ist man gezwungen, Epoxidharze bei erhöhten Temperaturen in einer Heißhärtung mit aromatischen oder cycloaliphatischen Aminen, Carbonsäureanhydriden, Polyphenolen, Novolaken oder mit latenten Härtern auszuhärten.

Aus Houben-Weyl, Methoden der Organischen Chemie, Band E20, Makromolekulare Stoffe, Georg Thieme Verlag Stuttgart, 1987, Seite 1959 ist bekannt, daß die Härtung von Epoxidharzen, insbesondere bei Bisphenol-A-Harzen, mit cyclischen Dicarbonsäureanhydriden und Tetracarbonsäurebisanhydriden zu gehärteten Produkten mit ausgezeichneten elektrischen Isoliereigenschaften und guter thermischer Beständigkeit führt. Darüber hinaus ist von Vorteil, daß die Härtung mit Anhydriden im Vergleich zur Härtung mit Aminen mit geringerer Exothermie abläuft. Nachteilig erweist sich allerdings, dass immer Härtungstemperaturen von mindestens 120 - 150° C erforderlich sind, wobei dann noch Härtungszeiten von mehreren Stunden benötigt werden. Selbst bei diesen Temperaturen ist die Vernetzungsreaktion noch so langsam, daß auf den Einsatz von Beschleunigern in der Regel nicht verzichtet werden kann. Die Verwendung von Härtebeschleuniger, so zeigt die Praxis, kann allerdings zu Qualitätseinbussen der gehärteten Harzsysteme führen.

Die US 5'629'379 beschreibt ein gehärtetes Epoxyharzsystem aus einer Mischung von vier Komponenten, die bei einer Temperatur zwischen 80°C und 120°C geliert und bei Temperaturen zwischen 200°C und 300°C gehärtet wird. Ausser der Epoxyharzkomponente und der Anhydridhärterkomponente enthält die Mischung insbesondere eine zusätzliche Härterkomponente sowie eine Härtebeschleunigerkomponente.

US 4'559'272 bzw. WO 85 05215 beschreiben ein Verfahren zum Einbetten einer elektrischen Komponente durch Imprägnieren der elektrischen Komponente mit einer wärmehärtbaren Zusammensetzung aus einem polyglycidylischen aromatischen Amin, einem polycarboxylierten Carbonsäureanhydrid und einem Härtebeschleuniger und anschliessendem Härten der Zusammensetzung. Wie in dieser Schrift offenbart, wird der Härtebeschleuniger insbesondere hinzugefügt, um eine niedrige Härtetemperatur zu erreichen. Die in den Beispielen offenbarte Geliertemperatur liegt bei ungefähr 100°C. Der gleiche Anmelder beschreibt in der US 4'595'623 einen faserverstärkten, syntaktischen Schaum-Verbundwerkstoff, welcher als Matrix ebenfalls die oben erwähnte wärmehärtbare Zusammensetzung besitzt.

In der DE 26 50 746 bzw. in der US 4'002'599 wird eine bei Zimmertemperatur aushärtbare Epoxyharzmasse beschrieben, die in einer Mischung ein Polyglycidylaminophenolepoxyharz und ein Biphenylanhydrid enthält. Alle beschriebenen Beispiele beziehen sich hierbei insbesondere auf die Härtung von Triglycidyl-para-aminophenol (TGpAP) mit Benzophenon-3,3',4,4'-tetracarbonsäuredianhydrid (BTDA) als alleinigem Härter oder mit Härtermischungen aus BTDA und Maleinsäureanhydrid (MA).

Das in der DE 26 50 746 bzw. in der US 4'002'599 beschriebene TGpAP-BTDA-System erweist sich allerdings insbesondere in der Praxis bzw. bei der praktischen Anwendung als nachteilig und überaus problematisch, da sich das BTDA nur unter großen Schwierigkeiten in TGpAP lösen läßt. So empfehlen die Erfinder ein exzessives Mischen, z.B. drei Stunden in einer Kugelmühle. Ferner wird empfohlen, das BTDA feinst zu pulverisieren oder in einem Dreiwalzenstuhl unter hohen Scherkräften zu behandeln. Diese langwierigen Verfahrensweisen können jedoch insbesondere die Hydrolyse des Anhydrids bewirken; außerdem bleibt die Auflösung von BTDA in TGpAP in der Regel unvollständig. Darüber hinaus führen zusätzliche Produktionsschritte zu verlängerten Herstellungszeiten und damit zu höheren Produktionskosten.

In der Veröffentlichung von J. E. O'Connor und J. A. Graham, dem Erfinder der DE 26 50 746 bzw. der US 4'002'599, in Adhesives Ages 21/ 7 (July 1978), Seite 20-23 mit dem Titel "Epoxy with Low-Temperature Cure and High-Temperature Properties Developed" wird unter anderem die in der DE 26 50 746 bzw. US 4'002'599 offenbarte Erfindung erneut beschrieben und kommentiert. Wie Seite 20, 3. Spalte, Zeile 20ff zu entnehmen, bezeichnen selbst die Autoren in ihrer Erfindung das TGpAP-BTDA-System ausdrücklich als Ausnahme, wörtlich: "The TGpAP-BTDA-system appears to be the "exception to the rule" regarding BTDA as a curing agent for epoxy resins".

Es besteht somit die Nachfrage nach Epoxidharz-Härter-Systemen, die bei niedriger Temperatur aushärten können und Produkte ergeben, die eine erhöhte Temperatur-, Chemikalien- und Lösemittelbeständigkeit aufweisen. Potentielle Anwendungen wären z.B. Klebstoffe, Matrixharze für Faserverbundwerkstoffe und Reparaturharze für Bauteile, bei denen sich die Anwendung hoher Temperaturen verbietet. Weitere Anwendungen wären Gießharz- und Einbettmassen, speziell zur Umhüllung von großen elektronischen Bauteilen, bei denen die Aushärtung bei niedriger Temperatur, mit niedriger Exothermie und folglich mit beträchtlicher Energieeinsparung ablaufen kann, wobei ein weiterer Vorteil ist, daß Produkte mit verminderter innerer Spannung entstehen.

### Darstellung der Erfindung und Wege zur Ausführung

Es ist daher eine Aufgabe der vorliegenden Erfindung ein bei Raumtemperatur härtbares Harzsystem der eingangs genannten Art anzugeben, das vorzugsweise ohne Verwendung eines Härtebeschleunigers vernetzbar ist.

Es ist des weiteren eine Aufgabe der vorliegenden Erfindung ein Harzsystem der eingangs genannten Art zu bieten, das insbesondere über ein besseres Löseverhalten, insbesondere der Härterkomponente, als die bekannten Systeme verfügt.

Darüber hinaus ist es eine Aufgabe der vorliegenden Erfindung, ein Verfahren zur Herstellung eines isolierten elektrischen Leiters anzugeben, dessen Isolation bei niedrigen Temperaturen, insbesondere Raumtemperatur, erfolgen kann.

Diese und weitere Aufgaben werden erfindungsgemäss durch ein Harzsystem mit den Merkmalen des Anspruchs 1, durch ein Verfahren zur Herstellung eines isolierten elektrischen Leiters mit den Merkmalen des Anspruchs 14, durch einen isolierten elektrischen Leiter mit den Merkmalen des Anspruchs 17, durch einen Giessharzkörper mit den Merkmalen des Anspruchs 18 und eine Beschichtung mit den Merkmalen des Anspruchs 21 gelöst. Bevorzugte Ausführungsformen des Harzsystems haben die Merkmale der Ansprüche 2 bis 13 und bevorzugte Ausführungsformen des erfindungsgemässen Verfahrens sind in den Ansprüchen 15 und 16 angegeben. Des weiteren haben die bevorzugten Ausführungsformen des erfindungsgemässen Giessharzkörpers die Merkmale der Ansprüche 19 und 20.

Unter dem Begriff .,Vemetzbarkeit" wird hierin die Fähigkeit eines polymerisierbaren Systems verstanden, einen nicht reversiblen Zustand anzunehmen.

Es wurde nun überraschenderweise gefunden, daß das von Graham und O'Connor beschriebene System nicht die Ausnahme darstellt, sondern nur ein einziges Beispiel für das allgemein anwendbare Prinzip der Härtung von Epoxidharzen durch cyclische Säureanhydride bei niedrigen Temperaturen ist. Voraussetzung ist jedoch, daß die einzelnen, oder in Mischungen einsetzbaren verschiedenen, polyfunktionellen Epoxidharze ein Epoxidharz mit mindestens einer Aminoglycidylgruppe enthalten. Erfindungsgemäß sind eine Vielzahl von aromatischen, aliphatischen, cycloaliphatischen und heterocyclischen Säureanhydride zur Kalthärtung von Epoxidharzen geeignet, wobei vorzugsweise Produkte mit erhöhter Temperaturbeständigkeit erhalten werden. Die Autoren Graham und O'Connor hatten das allgemein anwendbare Prinzip ihrer Erfindung nicht erkannt.

Es wurde nun überraschenderweise gefunden, daß es zahlreiche Kombinationen von cyclischen Säureanhydriden und Aminoglycidylverbindungen gibt, die ein deutlich besseres Löseverhalten als das von Graham und O'Connor beschriebene System aufweisen, und die homogene und transparente Formkörper ergeben, vgl. Tabelle 3.

Die in der vorliegenden Erfindung anwendbaren Epoxidharze haben im Durchschnitt mehr als eine Epoxygruppe pro Molekül, von denen mindestens eine als Aminoglycidylverbindung vorliegen muß. Besonders geeignete Aminoglycidylverbindungen gemäß dieser Erfindung sind N,N-Diglcidylanilin, N,N-Diglycidyltoluidin, N,N,N',N'-Tetraglycidyl-1,3-diaminobenzol, N,N,N',N'-Tetraglycidyl-1,4-diaminobenzol, N,N,N',N'-Tetraglycidylxylylendiamin, N,N,N',N'-Tetraglycidyl-4,4'-diaminodiphenylmethan, N,N,N',N'-Tetraglycidyl-3,3'diethyl- 4,4'-diaminodiphenylmethan, N,N,N',N'-Tetraglycidyl-3,3'-diaminodiphenylsulfon, N,N'-Dimethyl-N,N'-diglycidyl-4,4'diaminodiphenylmethan, N,N,N',N'-Tetraglycidyl-α,α -bis(4-aminophenyl)-pdiisopropylbenzol und N,N,N',N'-Tetraglycidyl-α,α'-bis-(3,5-di-methyl-4-aminophenyl)-p-diisopropylbenzol. Weitere besonders bevorzugte Aminoglycidylverbindungen der Formel (I) sind in der Tabelle 6 mit Handelsname, Hersteller und chemischer Strukturformel angegeben.

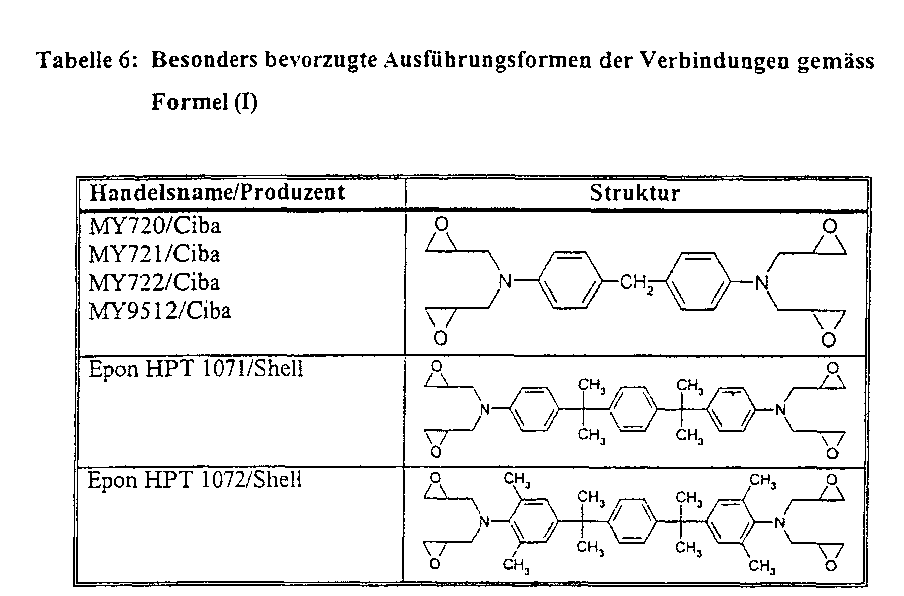

Besonders geeignete Polyglycidylverbindungen von Aminophenolen sind O,N,N-Triglycidyl-4-aminophenol, O,N,N-Triglycidyl-3-aminophenol und 2,2-(N,N-Diglycidyl-4-aminopheny-1-4'-glycidyloxyphenyl)-propan. Weitere Aminoglycidylverbindungen, die erfindungsgemäß eingesetzt werden können, sind beschrieben in Houben-Weyl, Methoden der Organischen Chemie, Band E20, Makromolekulare Stoffe, Georg Thieme Verlag Stuttgart, 1987, Seiten 1926-1928. Die tri- und tetrafunktionellen Aminoglycidylverbindungen können beispielsweise nach den in den US. 2 884 406, US 2 921 037 und US 2 951 822 sowie nach den in der EP 148 117 beschriebenen Verfahren hergestellt werden.

Zusammen mit den Aminoglycidylverbindungen können andere Polyepoxide mitverwendet werden, wobei deren Anteil in der Epoxidharzmischung zwischen 1 Mol-% und maximal 75 Mol-%, vorzugsweise zwischen 10 und 50 Mol-%, betragen kann. Diese anderen Polyepoxide können aliphatisch, cycloaliphatisch, aromatisch oder heterocyclisch sein, sie können auch Substituenten wie Halogene, Hydroxyl, Ether- oder andere Reste aufweisen. Im allgemeinen basieren sie auf den bekannten und in der Literatur ausführlich beschriebenen mehrwertigen Phenolen, wie z.B. Bisphenol-A, -F und -S, auf epoxidierten Phenol- oder Kresol-Novolaken und auf cycloaliphatischen Epoxidharzen. Beispiele für aliphatische Epoxidharze sind Epoxyalkane, Diglycidylether von Diolen sowie cis/trans-1,4-Cyclohexandimethanol-diglycidylether; Beispiele für cycloaliphatische Epoxidharze sind Cyclohexenoxid, 4-Vinyl-1-cyclohexendiepoxid und 3,4-Epoxycyclohexancarbonsäure-(3,4-epoxycyclohexyl-methylester).

Geeignete Härter sind cyclische Anhydride von aromatischen, aliphatischen, cycloaliphatischen und heterocyclischen Polycarbonsäuren. Besonders geeignete Anhydride von aromatischen Polycarbonsäuren lassen sich durch die Formeln I bis III beschreiben, wobei R₁, R₂, R₃, R₄ Wasserstoff oder Substituenten wie Halogen-, Alkyl-, Alkoxy-, oder Nitrogruppen, usw. sein können. Z kann - O - , - S - , - SO₂ - , -CO - , - CH₂ - oder ein anderes Alkylen sowie ein Oxoalkylen sein. wobei n = 0 oder n =1 ist.

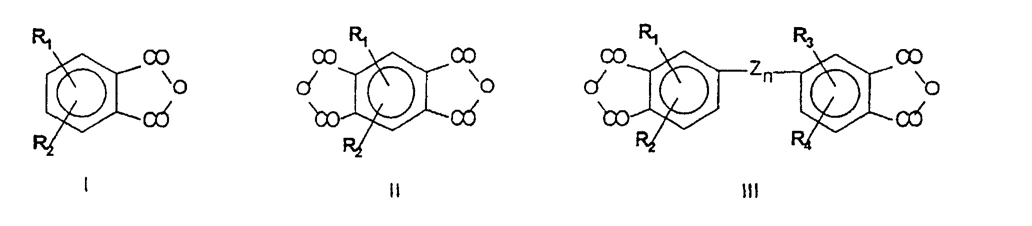

Beispiele für Anhydride mit den Strukturen I bis III sind: Phthalsäureanhydrid, 4-Methylphthalsäureanhydrid, 3,6- und 4,5-Dichlorphthalsäureanhydrid, 3,6-Difluorphthalsäureanhydrid, Tetrabrom-, Tetrachlor- und Tetrafluorphthalsäureanhydrid, 3- und 4-Nitrophthalsäureanhydrid, Benzol-1,2,4,5-tetracarbonsäuredianydrid (Pyromellithsäuredianhydrid), 3,3',4,4'-Benzophenontetracarbonsäuredianhydrid, 2,2-Bis(3,4-benzoldicarboxyphenyl)propan-dianhydrid, 2,2-Bis(2,3benzoldicarboxyphenyl)-propandianhydrid, 2,2-Bis(4,4-benzoldicarbonsäureanhydrid)perfluorpropan, Bis(3,4-dicarboxyphenyl)etherdianhydrid, Bis(3,4-dicarboxylphenyl)methandianhydrid, 2,2',3,3-Diphenyltetracarbonsäuredianhydrid und 3,3',4,4'-Diphenyltetracarbonsäuredianhydrid. Die aromatischen Carbonsäureanhydride können zusätzliche funktionelle Gruppen enthalten. Als Beispiele seien genannt: Benzol-1,2,4-tricarbonsäure-anhydrid (Trimellithsäureanhydrid), 3-Hydroxyphthalsäureanhydrid, 3- bzw. 4-Maleinimidophthalsäureanhydrid sowie das 2-Sulfobenzoesäure-cyclo-anhydrid. Geeignet sind auch Derivate des Trimellithsäureanhydrids wie z.B. das Bistrimellithsäureanhydrid des Neopentylglykols.

Außer den unter I bis III beschriebenen Anhydriden sind auch aromatische Carbonsäureanhydride mit kondensierten Ringsystemen geeignet: 1,8-Naphthalsäureanhydrid, Naphthalin-1,4,5,8-tetracarbonsäuredianhydrid, Naphthalin-1,2,5,6-tetracarbonsäuredianhydrid, Naphthalin-3,4,5,8-tetracarbonsäuredianhydrid, Naphthalin-2,3,6,7-tetracarbonsäuredian-hydrid, 3,4,9,10-Perylentetracarbonsäuredianhydrid und ihre Halogenund Nitroderivate.

Das besonders geeignete und in dieser Erfindung bevorzugte Anhydrid unter den aliphatischen Dicarbonsäuren ist das Maleinsäureanhydrid. Es ist als alleiniges Härtungsmittel für Aminoglycidylharze und für ihre Mischungen mit anderen Epoxidharzen verwendbar. Maleinsäureanhydrid ist in den Aminoglycidylharzen sehr gut löslich. In Gemischen mit anderen Anhydriden wirkt Maleinsäureanhydrid als Löslichkeitsvermittler und erhöht die Lösegeschwindigkeit. Die gehärteten Harze haben eine hervorragende thermische Stabilität und hohe Glasübergangstemperaturen. Andere geeignete Anhydride sind Derivate des Maleinsäureanhydrids, wie z.B. Methyl- und Dimethyl-maleinsäureanhydrid, Phenyl- und Diphenylmaleinsäureanhydrid, Brommalein-säureanhydrid, Dichlormaleinsäureanhydrid, und dergleichen.

Einige cycloaliphatische Dicarbonsäureanhydride, wie sie erfindungsgemäß verwendet werden können, haben den Vorteil, daß sie flüssig oder niedrig schmelzend sind, wie z.B. cis-Cyclohexan-1,2-dicarbonsäureanhydrid, 4-Methyl-cylohexan-1,2-dicarbonsäureanhydrid, Methylcyclohexen-4,5-dicarbonsäureanhydride und bicyclische Verbindungen wie Methyl-5-norbomen-2,3-dicarbonsäureanhydrid und dessen isomeren Mischungen (handelsüblich als NADIC methyl anhydride). Andere geeignete mono- und bicyclische cycloaliphatische Dicarbonsäureanhydride sind 1,2,3,4-Cyclobutantetracarbonsäuredianhydrid, cis-1,2,3,4,-Cyclopentantetracarbonsäuredianhydrid, trans-Cyclohexan-1,2-dicarbonsäureanhydrid, 1-Cyclopenten-1,2-dicarbonsäureanhydrid, cis-4-Cyclohexen-1,2-dicarbonsäureanhydrid, cis-5-Norbornen-endo-2,3-dicarbonsäureanhydrid (NADIC anhydride), Bicyclo[2,2,2]oct-7-en-2,3,5,6-tetracarbonsäuredianhydrid und 1,4,5,6,7,7-Hexachloro-5-norbornen-2,3-dicarbon-säurcanhydrid (HET-Anhydrid).

Heterocyclische Carbonsäureanhydride, die erfindungsgemäß verwendet werden können, sind z.B. Pyridin-2,3-dicarbonsäureanhydrid, Pyridin-3,4-dicarbonsäureanhydrid, Pyrazin-2,3-dicarbonsäureanhydrid, Pyrazin-2,3,5,6-tetracarbonsäuredianhydrid, Thiophen-2,3,4,5-tetra-carbonsäuredianhydrid, Tetrahydrofuran-2,3,4,5-tetracarbonsäuredianhydrid, Isatosäure-anhydrid und N-Methyl-isatosäureanhydrid.

Weitere für die vorliegende Erfindung besonders bevorzugte cyclische Anhydride sind in der Tabelle 7 unter Angabe der hierin verwendeten Abkürzungen und chemischer Strukturformel angegeben.

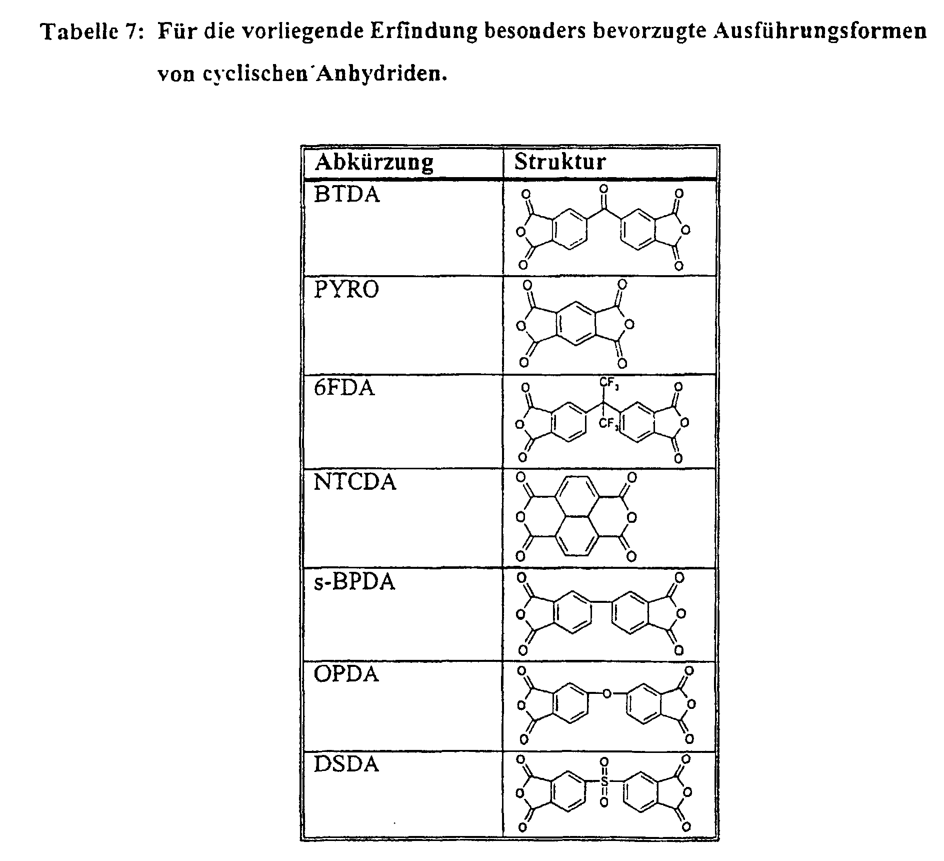

Zusammen mit den Mischungen aus Aminoglycidylverbindungen und cyclischen Carbonsäureanhydriden können Lactone mit eingesetzt werden. Die flüssigen oder leicht schmelzbaren Lactone haben niedrige Viskositäten und verbessern die Löslichkeit der Säureanhydride in den Gemischen, sie wirken wie Reaktivverdünner. Mischungen aus Epoxidharzen und Lactonen wurden in der Literatur schon beschrieben. Sie waren bei niedrigen Temperaturen bisher jedoch nur durch Amine härtbar, vgl. BE 617.540. Die Härtung der Epoxid-Lacton-Gemische durch Säureanhydride erfordert jedoch wieder die üblichen Härtungstemperaturen von 120 - 180°C, vgl. US. 3.222.321.

Beispiele für Lactone, die erfindungsgemäß bei der bei niedrigen Temperaturen erfolgenden Härtung von Aminoglycidylverbindungen und cyclischen Säureanhydriden mit eingesetzt werden können, sind β-Propiolacton, β-Butyrolacton, γ-Butyrolacton, γ-Valerolacton und ε-Caprolacton sowie deren Derivate, wie z.B. 2-Acetyl-γ-butyrolacton. Der Anteil der Lactone in der Epoxidharzmischung kann zwischen 0,1 und 1,5 Molen per 1 Äquivalent Epoxidgruppe betragen.

Die Definition und Berechnung der hierin verwendeten Äquivalente, seien es Epoxidäquivalent der ersten Komponente oder Anhydridäquivalent der zweiten Komponente oder dergleichen, ist dem Fachmann bekannt und bedarf keiner weiteren Erläuterung.

Das als Härtungsmittel verwendete cyclische Carbonsäureanhydrid wird in Konzentrationen von 0,2 bis 1,2 Äquivalenten der Anhydridgruppen per 1 Epoxidäquivalent eingesetzt. Es ist vorteilhaft, die möglichst feinkörnigen Anhydride mit intensiv wirkenden Mischaggregaten in die flüssige Epoxidharzmischung einzubringen. Sind die Anhydride oder deren Mischungen flüssig oder leicht schmelzbar, so legt man diese vor und gibt anschließend die Epoxidharze hinzu. Kurze Mischzeiten mit hochtourig laufenden Rührund Dispergierwerkzeuge werden gegenüber langsam laufenden Aggregaten, wie z.B. Walzenstühlen oder Kugelmühlen, bevorzugt. Auch ist die Anwendung von Ultraschall oder von Mikrowellen zur schnellen Durchmischung möglich.

Die erfindungsgemäßen härtbaren Mischungen können ferner noch Plastifizierungs- oder Elastifizierungsmittel oder Additive, wie Streckmittel, Füllstoffe, Verstärkungsfasern und Flammschutzmittel enthalten.

Erfindungsgemäss kann die Härtung vorzugsweise bei niedrigen Temperaturen, z.B. zwischen 0°C und 90°C erfolgen. Die Härtung der erfindungsgemäßen Mischungen ist grundsätzlich bei Raumtemperatur möglich, wobei ein Aushärtungsgrad von über 90 %, verfolgt durch thermische Analyseverfahren (DSC), innerhalb eines Zeitraumes von einigen Tagen bis zu wenigen Wochen erreicht wird. Höhere Temperaturen, zwischen 30°C bis maximal 90°C, werden dann empfohlen, wenn die Epoxidharzmischungen bei Raumtemperatur sehr hochviskos oder noch fest sind, oder wenn die Auflösung von festen Anhydriden in der Epoxidharzmischung beschleunigt werden soll. Die Härtung kann gewünschtenfalls auch in zwei Stufen vorgenommen werden, indem die härtbare Mischung bei niedriger Temperatur angehärtet und bei erhöhter Temperatur nachgehärtet (getempert) wird. Dieses Verfahren wird dann bevorzugt, wenn man die bei Raumtemperatur erforderlichen längeren Aushärtungszeiten abkürzen will. Man läßt z.B. die erfindungsgemäßen härtbaren Mischungen 20 bis 24 Stunden bei Raumtemperatur härten, um sie dann in 1 bis 2 Stunden bei Temperaturen zwischen 50 und 90°C nachzuhärten. Damit erreicht man Aushärtungsgrade (DSC) von 97 % und höher.

Die erfindungsgemäßen härtbaren Massen lassen sich z.B. als Laminier-, Tränk- und Gießharze, Beschichtungen, Einbettungs- und Isoliermassen für die Elektrotechnik, insbesondere aber als Klebstoffe mit erhöhter thermischer Beständigkeit verwenden. Die erhöhte Temperaturbeständigkeit der erfindungsgemäßen härtbaren Massen wird mittels thermischer Analyse in der Ausführungsform der Thermogravimetrischen Analyse (TGA) und der Dynamisch-mechanischen Analyse (DMA) nachgewiesen.

Bei allen Anwendungsbeispielen beträgt die Konzentration der als Härtungsmittel verwendeten, einzeln oder in Mischungen eingesetzten cyclischen Carbonsäureanhydride, wenn nicht andere Molverhältnisse spezifiziert werden, immer 0,64 Äquivalente der gesamten Anhydridgruppen per 1,0 Epoxidäquivalent. Wird Maleinsäure in Mischung mit anderen Anhydriden eingesetzt, dann beträgt das Massenverhältnis von Maleinsäure zum zweiten Anhydrid immer 3 : 2.

Alle Harz-Härter-Mischungen werden mit einem Ultraturrax Dispergator 4 Minuten lang bei 13.500 Upm dispergiert und dann zu Probekörpern für die DMA vergossen. Ein zweiter Ansatz dient zur Herstellung von Gießkörpern mit 2 cm Dicke zur visuellen Beurteilung der Homogenität. Hochviskose Mischungen werden vorher zur Verbesserung der Durchmischung wenige Minuten lang auf 30-50°C erwärmt. Die Aushärtebedingungen sind 24 h Lagerung bei Raumtemperatur, gefolgt von einer Stunde Nachhärtung bei 90°C. Die Viskositäten der Mischungen werden mit einem Kegel-Platte-Viskosimeter bei 25°C bestimmt. Die DMA-Proben werden mit einer Aufheizrate von 3°C / min bei einer Festfrequenz von 1 Hz mit einer Amplitude von 0,2 mm geprüft. Das Maximum der Dämpfung (tang δ) dient zur Festlegung der Glasübergangstemperatur (T_{g}).

In der Tabelle 1 sind die Ergebnisse aus der TGA mit dem Beginn der thermischen Zersetzung (on-set point) und dem bei 600°C verbleibenden Rückstand aufgelistet. Man erkennt, daß der Zersetzungsbeginn aller Epoxide, die mit Anhydriden ausgehärtet wurden, weitaus höher liegt als die mit DETA ausgehärteten. Die Tabelle 2 enthält die Ergebnisse aus den Viskositätsmessungen und die Glasübergangstemperaturen aus der DMA.

In der Tabelle 3 sind die Ergebnisse der visuellen Prüfung der Homogenität an ausgehärteten Probekörpem mit 2 cm Dicke aufgelistet. Die Bewertungsskala reicht von 0 für absolut homogene, transparente Proben, über - 1 für eine leichte Trübung, von - 2 bis - 3 für zunehmende Trübung bis zu - 4 und -5 für Proben, die wenig bzw. viel eines Bodensatzes aus ungelösten Teilen enthalten. Die Ergebnisse zeigen, daß viele der erfindungsgemäßen Systeme eine erheblich bessere Homogenität, d.h. eine bessere Löslichkeit der Anhydride in den Epoxidharzen haben, als das von Graham beschriebene System.

Die Ergebnisse in Tabelle 4 beweisen, daß auch Gemische aus Bisphenol-A-Epoxidharzen mit Aminoglycidylverbindungen durch Anhydride bei niedrigen Temperaturen ausgehärtet werden können. Der Anteil der Aminoglycidylverbindung sollte in der Mischung aber nicht niedriger als 25 Mol-% liegen.

In den Tabellen 1 bis 5 werden folgende Abkürzungen benutzt, die hier in alphabetischer Reihenfolge aufgelistet sind; weitere Erläuterungen sind Tabelle 6 und Tabelle 7 zu entnehmen.

### a.) für die Epoxidharze:

- Epon 828: Bisphenol-A-Epoxidharz, Handelsprodukt der Fa. Deutsche Shell Chemie
- DGA: N,N-Diglycidylanilin, Handelsprodukt Bakelite Rütapox VE 3650
- TGMDA: N,N,N',N'-Tetraglycidyl-4,4'-diaminodiphenylmethan Handelsprodukt Ciba Araldit MY 721 Handelsprodukt Bakelite Rütapox VE 2895 / LV
- TGpAP: O,N,N-Triglycidyl-4-aminophenol (Triglycidylether des p-Aminophenols),
Handelsprodukt Ciba Araldit MY 510
- Epoxycyclo: 3,4-Epoxycyclohexancarbonsäure-(3,4-epoxycyclohexylmethylester)

### b.) für die Anhydride:

- 6F-DA: Hexafluorpropyliden-2,2-bis-phthalsäureanhydrid
- BDA: 1,2,3,4-Butantetracarbonsäuredianhydrid
- BTDA: 3,3'-4,4'-Benzophenontetracarbonsäuredianhydrid
- CPTDA: cis-1,2,3,4-Cyclopentantetracarbonsäuredianhydrid
- Epiclon: 5-(2,5-Dioxotetrahydrofuryl)-3-methyl-cyclohexen-1,2-dicarbonsäureanhydrid; Handelsprodukt Epiclon B 4400
- HET: 1,4,5,6,7,7-Hexachloro-5-norbornen-2,3-dicarbonsäureanhydrid
- HHPA: Hexahydrophthalsäureanhydrid (1,2-Cyclohexandicarbonsäureanhydrid)
- MA: Maleinsäureanhydrid
- MCHA: 4-Methylcyclohexandicarbonsäureanhydrid
- MNDA: Methyl-5-norbornen-2,3-dicarbonsäureanhydrid (Methyl-NADIC-anhydrid)
- NDCA: Naphthalin-1,8-dicarbonsäureanhydrid
- NPA: 3-Nitrophthalsäureanhydrid
- PSA: Phthalsäureanhydrid
- PYRO: Benzol-1,2,4,5-tetracarbonsäuredianydrid (Pyromellithsäuredianhydrid)
- SBA: 2-Sulfobenzoesäureanhydrid
- TRIM: Benzol--1,2,4-tricarbonsäure-anhydrid (Trimellithsäureanhydrid)

### c.) andere Verbindungen und Härter

- Bismaleimid: Bis-(4-maleinimido-phenyl)-methan
- Butyro: γ - Butyrolacton
- Capro: ε - Caprolacton
- DETA: Diethylentriamin

### d.) A/E ist das molare Verhältnis von Anhydrid- zu Epoxygruppen

**Tabelle 1 :**

| **Thermische Stabilität der ausgehärteten Epoxidharzsysteme** | | |
|---|---|---|
| **SYSTEM** | **On-set point TGA °C** | **Rückstand bei 600°C %** |
| **MA / TgpAP** | 328 | 15 |
| **6F-DA / TgpAP** | 325 | 40 |
| **BTDA / MA / TgpAP** | 324 | 42 |
| **MA / Bismaleinimid** | 310 | 18 |
| **PYRO / MA / TgpAP** | 307 | 30 |
| **PYRO / TGpAP A/E = 0,8** | 305 | 13 |
| **PYRO / TGpAP A/E = 0,64** | 304 | 19 |
| **PYRO / TGpAP A/E = 0,4** | 300 | 29 |
| **HET / MNDA / TgpAP** | 300 | 4 |
| **HET / MNDA / MA / TgpAP** | 298 | 4 |
| **HET / MCHA / TgpAP** | 298 | 15 |
| **HET / MCHA / MA / TgpAP** | 292 | 7 |
| **TRIM / MA / TgpAP** | 283 | 32 |
| **NPA / MA / TgpAP** | 268 | 25 |
| **BDA / MA / TgpAP** | 274 | 15 |
| **PSA / MA / TgpAP** | 260 | 12 |
| **Epiclon / MA / TgpAP** | 244 | 10 |
| **6F-DA / MA / TgpAP** | 232 | 23 |
| **NCDA / MA / TgpAP** | 248 | 18 |
| **PYRO / TGpAP A/E = 0,2** | 220 | 18 |
| **DETA / TgpAP** | 158 | 15 |
| **DETA / Epon 828** | 127 | 10 |
| Thermogravimetrische Analyse (TGA), Aufheizungsrate 10°C / min, in Luft | | |

**Tabelle 2:**

| **Viskositäten und Glasübergangstemperaturen verschiedener Epoxidharz - Härter - Gemische** | | | |
|---|---|---|---|
| **SYSTEM** | **Anfangs- Viskosität mPa s** | **Viskosität mPa s nach Min. bzw. Std (h)** | **T**_{**g**} **(DMA) run 1 / run 2 °C / °C** |
| **BTDA / MA / TGpAP** | 260 | | 182,9 |
| | | | 183,7 |
| **MA / TGpAP** | 40 | 120 / 45 | 142,7 |
| | | 3.760/12 h | 143,3 |
| **CPTDA / MA / TGpAP** | 110 | 840 | 155,9 |
| | | 120 | 159,3 |
| **HET / MA / TGpAP** | 1.380 | 25.600 | 150,4 |
| | | 20 | 151,2 |
| **SBA / MA / TGpAP** | 520 | 11.520 | 212,2 |
| | | 35 | 209,6 |
| **PYRO / MA / TGpAP** | 440 | 4.000 | 185,7 |
| | | 80 | 184,1 |
| **PYRO / MCHA / TGpAP** | 660 | 24.320 | 181,0 |
| | | 3,5 h | 181,6 |
| **PYRO / HHPA / TGpAP** | 1.120 | 10.880 | 167,5 |
| | | 95 | 168,5 |
| **PYRO / MA / TGMDA** | 2.480 | 30.720 | 224,5 |
| | | 55 | 223,4 |
| **PYRO / DGA** | 90 | 16.640 | 133,3 |
| | | 460 | 133,4 |
| **TRIM / MA / TGpAP** | 280 | 12.160 | 204,8 |
| | | 230 | 203,8 |
| **TRIM / MA / PYRO / TGpAP** | 660 | 12.800 | 196,9 |
| | | 65 | 197,0 |
| **TRIM / MA / TGMDA** | 7.680 | 18.500 | 236,6 |
| | | 45 | 237,1 |
| **TRIM *l* MA / MCHA / TGpAP** | 920 | 17.280 | 212,4 |
| | | 145 | 213,3 |

**Tabelle 3 :**

| **Viskositäten und Homogenität verschiedener Epoxidharz - Härter - Gemische** | | |
|---|---|---|
| **SYSTEM** | **Anfangsviskosität mPa s** | **Homogenität Wertung von 0 (homogen, transparent) bis -5 (Bodensatz)** |
| **BDTA / TgpAP** | 8.800 | - 5 viel Bodensatz |
| **BTDA / MA / TgpAP** | 260 | - 3 |
| **MA / TGpAP** | 40 | 0' |
| **CPTDA / MA / TgpAP** | 110 | - 2 |
| **HET / MA / TgpAP** | 1.380 | - 1 |
| **SBA / MA / TgpAP** | 520 | - 1 |
| **PYRO / TGpAP mit A/E = 0,64** | 2.700 | - 3 |
| **PYRO / MA / TGpAP mit A/E = 0,64** | 460 | 0 |
| **PYRO / MA / TGpAP mit A/E = 1,0** | 240 | 0 |
| **PYRO / MCHA / TgpAP** | 660 | - 1 |
| **PYRO / HHPA / TgpAP** | 1.120 | - 2 |
| **PYRO / MA / TGMDA** | 2.480 | 0 |
| **PYRO / DGA** | 90 | 0 |
| **TRIM / MA / PYRO / TGpAP** | 660 | - 1 |
| **TRIM / MA / TGMDA** | 7.680 | - 1 |
| **TRIM / MA / MCHA / TGpAP** | 920 | - 4 |
| **TRIM / MA / TgpAP** | 280 | - 1 |
| **PYRO / MA / TGpAP / Epon 828 mit TGpAP / Epon 828 = 50 / 50 Mol-%** | 530 | 0 |
| **PYRO / Butyro / TGpAP mit Butyro / PYRO = 50 / 50 Mol-%** | 590 | 0 |
| **HET / Butyro / TgpAP mit Butyro / HET = 50 / 50 Mol-%** | 1.320 | 0 |
| **HET / Capro / TgpAP mit Capro / HET = 50 / 50** Mol-% | 1.680 | - 2 |
| **HET / MNDA / TgpAP mit HET / MNDA = 50 / 50 Mol-%** | 2.800 | 0 |
| **DETA / TgpAP** | 160 | - 1 |
| DETA / Epon 828 | 2.500 | 0 |

**Tabelle 4 :**

| **Aushärtung von TGpAP in Mischung mit einem Bisphenol - A - Epoxid** | | | | |
|---|---|---|---|---|
| **SYSTEM** | **Anfangsviskosität mPa s** | **Viskosität mPA s/ nach Minuten** | **Tg** | |
| | | | **run 1 °C** | **/ run 2 ° C** |
| **PYRO/MA/TGpAP** | 350 | 57.600 | 184,1 | 185,7 |
| **100% TGpAP** | | 85 | | |
| **PYRO/MA/TGpAP/** | 460 | 12.080 | 154,5 | 156,4 |
| **Epon 828** | | 125 | | |
| **TGpAP/828=75/25 mol%** | | | | |
| **PYRO/MA/TGpAP/** | 530 | 14.080 | 146,6 | 149,3 |
| **Epon 828** | | 170 | | |
| **TGpAP/828=50/50 mol%** | | | | |
| **PYRO/MA/TGpAP/** | 550 | 9.600 | 98,2 | 98,6 |
| **Epon 828** | | 265 | | |
| **TGpAP/828=25/75 mol%** | | | | |
| **PYRO/MA/EPON 828** | | keine Reaktion | bleibt flüssig | |
| **100% EPON 828** | | | | |

### Anwendungsbeispiele

### Beispiel 1: Klebverbindungen von Aluminiumlegierungen

Die Eignung der erfindungsgemässen härtbaren Massen als Klebstoffe, die bei niedrigen Temperaturen aushärten und eine erhöhte thermische Beständigkeit aufweisen, wird an Klebverbindungen von Aluminiumlegierungen überprüft.

Die verwendeten Epoxidharzsysteme bestehen erfindungsgemäss aus Aminoglycidylverbindungen und cyclischen Carbonsäureanhydriden. Zunächst versetzt man die Epoxidharze mit 33 Gew.% Aluminiumpulver, das auch in handelsüblichen Klebstoffformulierungen enthalten ist, dann gibt man die Härterkomponente hinzu und mischt anschliessend alle Bestandteile intensiv durch. Bei besonders hochviskosen Mischungen wird wenige Minuten auf 30-50°C erwärmt, um die Durchmischung zu beschleunigen. Bei allen Anwendungsbeispielen beträgt die Konzentration der als Härtungsmittel verwendeten cyclischen Carbonsäureanhydride 0,64 Äquivalente Anhydridgruppe per 1,0 Epoxidäquivalent. Wird Maleinsäure in Mischung mit anderen Anhydriden eingesetzt, dann beträgt das Massenverhältnis von Maleinsäure zum zweiten Anhydrid immer 3:2. Das Gemisch aus O,N,N-Triglycidyl-4-aminophenol (Triglycidylether des p-Aminophenols = TGpAP) und dem Bisphenol-A-Epoxidharz (Epon 828) enthält die Epoxidharze im Verhältnis 75:25 Molprozent.

Die Bleche aus handelsüblicher Aluminiumlegierung (Luftfahrtqualität) werden durch Entfetten, alkalisches Beizen und Pickling-Beizen in bekannter Weise vorbehandelt. Die intensiv gemischten, härtbaren Massen trägt man als Klebstoff mit 100 bis 200 µm Schichtdicke auf. Die fixierten Klebproben lässt man 24 Stunden bei Raumtemperatur liegen und härtet dann eine Stunde bei 90°C nach. Die Klebfestigkeit der einschnittig überlappten Metallklebungen ermittelt man im Zugscherversuch nach DIN 53283 bei 25°, 120°C und 150°C. Bestimmt werden die Anfangsfestigkeiten und die verbleibende Klebfestigkeit nach einer 40-tägigen Auslagerung der Klebproben in 70°C heissem Wasser.

Als Vergleich dient der Epoxidklebstoff EA 934 NA mit den Komponenten A und B von der Firma Hysol Dexter Corporation, Pittsburg, California (USA). Es wird als kalthärtendes Epoxidharzsystem in der Luftfahrtindustrie verwendet und ergibt Klebverbindungen mit deutlich erhöhter Temperaturbeständigkeit im Vergleich zu solchen mit Epoxidharzen auf Basis Bisphenol-A. Das Epoxidharz (Komponente A) des Klebstoffes EA 934 ist mit ca. 33 Gew.-% Aluminiumpulver gefüllt, der Härter (Komponente B) enthält aliphatische Amine.

Die Versuchsergebnisse sind in der Tabelle 5 aufgelistet. Man erkennt die Überlegenheit der erfindungsgemäss mit Anhydriden gehärteten Epoxidklebverbindungen gegenüber den Klebverbindungen, die mit einem üblichen aminischen Härter gehärtet wurden. Die Überlegenheit der mit Anhydriden ausgehärteten Epoxide wird besonders deutlich erkennbar bei den Zugscherproben, die 40 Tage in 70°C heissem Wasser ausgelagert und dann bei höheren Temperaturen geprüft wurden.

**Tabelle 5:**

| **Zugscherfestigkeit von AI/AI-Klebverbindungen** | | | | | | |
|---|---|---|---|---|---|---|
| Epoxidharz-/ Härtersysteme | Anfangsfestigkeiten(Mpa) Prüftemperaturen °C | | | Restfestigkeiten nach Auslagerung (Mpa) Prüftemperaturen °C | | |
| | 25 | 120 | 150 | 25 | 120 | 150 |
| Hysol EA 934 NA (parts A / B) | 23,5 | 12,9 | 9,3 | 17,5 | 8,4 | 4,4 |
| BTDA/MA/TGpAP | 17,8 | 19,6 | 17,5 | 16,6 | 18,8 | 13,1 |
| PYRO/MA/TGpAP | 19,5 | 18,4 | 16,8 | 18,4 | 16,2 | 12,8 |
| PYRO/MA/TGMDA | 20,1 | 21,1 | 19,4 | 19,0 | 20,2 | 16,6 |
| HHPA/TGpAP | 21,9 | 16,4 | 14,0 | 19,1 | 15,3 | 11,3 |
| TRI/MA/TGpAP | 21,5 | 19,0 | 17,8 | 18,9 | 17,9 | 14,8 |
| PYRO/MA/TGpAP/Epon 828 TGpAP/828=50:50 Mol% | 19,1 | 16,9 | 11,8 | 18,0 | 13,7 | 9,8 |
| PYRO/MA/Epoxycyclo/TGpAP TGpAP/Epoxycyclo=50:50 Mol% | 16,9 | 17,8 | 16,9 | 17,0 | 15,7 | 11,9 |

### Beispiel 2: Hochwarmfester Elektrischer Isolator

Gegenwärtig verwendete Isolationssysteme für Mittel- und Hochspannungskomponenten basieren auf heisshärtenden Epoxidharzen, die in einem zeit- und energieaufwendigen Verfahren verarbeitet werden müssen. Die Herstellungsdauer beträgt heute rund ca. 15 Stunden bei Temperaturen bis zu 160°C. Die heutigen Dauereinsatztemperaturen von 105°C können dabei nur durch einen über 10 Stunden dauernden Temperprozess bei Temperaturen von 140 bis 160°C realisiert werden. Basierend auf den erfindungsgemässen Harzsystemen können nun mechanisch und elektrisch hochbelastete Isolatoren mit langer Lebensdauer bei Dauerbetriebstemperaturen >= 150°C hergestellt werden, hervorgehend aus einem Herstellungsprozess, dadurch gekennzeichnet, dass gegenüber dem Stand der Technik eine Produktionszeitersparnis von rund 70% resultiert, sowie der benötigte Energieaufwand zur Herstellung der Dauerwarmfestigkeit um ein Vielfaches reduziert wird.

Als Isolationsmaterial kommen vorzugsweise durch zwei oder mehrere cyclische Anhydride gehärtete, polyfunktionelle Epoxidharze mit anorganischen Füllstoffen und organischen Additiven wie z.B. Hochtemperatur-Thermoplaste, Core-Shell Zähmodifikatoren und dergleichen. zum Einsatz. Durch das erfindungsgemässe Verfahren gelingt es, den chemisch induzierten Schwund zu verkleinern und damit geringere Eigenspannungen im Bauteil einzufrieren. Mit den Giessystemen sind Giessbauteile mit Gussgewichten vorzugsweise weit über 100 kg realisierbar. Die Vorteile der Erfindung liegen unter anderem in der Kombination von Verarbeitungs-, Prozess- und daraus resultierenden Materialeigenschaften der beteiligten Komponenten im Hinblick auf Giessharzisolatoranwendungen in der Mittel- und Hochspannungstechnik.

In einem bevorzugten Ausführungsbeispiel wird dank der Bildung eines Eutektikums bedingt durch die Verwendung von mindestens zwei verschiedenen, geeigneten bzw. kompatiblen Anhydriden die Verarbeitungsviskosität der gesamten Harzmischung erniedrigt, was ein sehr hohes Füllstoffvolumen zulässt. Die Struktur der beteiligten Anhydride hat dabei einen entscheidenden Einfluss auf die Reaktivität und die Verarbeitbarkeit. In einem weiteren bevorzugten Ausführungsbeispiel werden dabei für Giessanwendungen unter anderem monofunktionelle Anhydride verwendet. Als Harzkomponente werden polyfunktionelle Epoxidharze und/oder Mischungen derselben mit konventionellen Bisphenol-A-Harzen verwendet. Als Füllstoffe werden vorzugsweise Aluminiumoxid, Aluminiumhydroxid, Glimmer und andere Aluminiumsilikat-Füllstoffe, Magnesiumoxid, Quarzmehl, Schmelzkorund, Wollastonit und Kreidemehl verwendet.

Tabelle 8 zeigt eine besonders bevorzugtes Harzsystem, welches zur Herstellung eines isolierten elektrischen Leiters oder eines warmfesten Giessharzkörpers gemäss der vorliegenden Efindung verwendet wird.

**Tabelle 8:**

| Besonders bevorzugte Zusammensetzung eines Harzsystems gemäss der vorliegenden Erfindung | | |
|---|---|---|
| **Komponente** | **Bezeichnung** | **Gewichtsteile** |
| 1 | *Araldite MY 721* | 100 |
| 2 (1.Härter) | *Maleinsäure-Anhydrid (MA)* | 48 |
| 2 (2.Härter) | *Hexahydro-Phtalsäureanhydrid (HHPA)* | 32 |
| 3 (Füllstoff) | *Schmelzkorund, Aluminiumoxid* | 270 |

Die Komponenten werden dabei vorzugsweise jeweils auf 60°C vorgewärmt und miteinander innig unter Rühren vermischt bis eine homogene Mischung entsteht. Der Abguss erfolgt vorzugsweise in auf 65°C vorgewärmte Formen. Die Gelierphase dauert bei vorzugsweise 65°C ca. 3.5 Stunden. Eine genügende Grünfestigkeit zum Entformen wird nach 4 Stunden erreicht. Die Härtungsphase dauert ca. 1 Stunde bei max 150°C, vorzugsweise bei weniger als 120°C und besonders bevorzugt zwischen 50°C und 90°C. Damit werden Glasumwandlungstemperaturen von über 200°C erreicht.

Generell werden zur Erreichung der Grünfestigkeiten, je nach Auswahl der beteiligten Komponenten, Geliertemperaturen zwischen insbesondere Raumtemperatur, d.h. bei einer Temperatur von im allgemeinen 25°C, und 90°C ausgewählt. Die Härtungsphase dauert generell zwischen 1 und 3 Stunden bei max. 150°C, vorzugsweise bei weniger als 120°C und besonders bevorzugt zwischen 50°C und 90°C. Diese ist stark abhängig von der Masse des Giessbauteils sowie der maximalen Wandstärke.

Bei einem Vergleich mit zwei heute verwendeten Isolationssystemen fallen der hohe T_{g}-Wert und die benötigten kurzen Prozesszeiten auf, ohne signifikante Einbussen bezüglich der mechanischen Eigenschaften (Tabelle 9).

**Tabelle 9:**

| Vergleich der Kenngrössen von Standard-Giessharzformulierungen nach dem Stand der Technik mit einer warmfesten Formulierung gemäss einem bevorzugten Ausführungsbeispiel der vorliegenden Erfindung. | | | | |
|---|---|---|---|---|
| **Kenngrösse** | **Temperatur** | **Isolator Stand der Technik 1** | **Isolator Stand der Technik 2** | **Warmfester Isolator** |
| *Harzbasis* | | *Festharz* | *Flüssigharz* | *Flüssigharz* |
| **Zugfestigkeit** | RT | 60 - 70 | 60 - 77 | 70.8 ± 1.8 |
| **[MPa]** | 105°C | 35 - 40 | 42 - 52 | 53.1 ± 2.4 |
| | 160°C | - | - | 37.5 ± 2.1 |
| **E-Modul [GPa]** | RT | 6.7 - 7.1 | 11.8 - 13.6 | 10.8 ± 0.1 |
| | 105°C | 6.0 - 6.2 | 9.4-10.5 | 8.8 ± 0.3 |
| | 160°C | - | - | 5.4 ± 0.3 |
| **Bruchdehnung** | RT | 1.0 - 1.5 | 0.5 - 0.75 | 0.71 ± 0.03 |
| **[%]** | 105°C | - | 0.46 - 0.88 | 0.71 ± 0.03 |
| | 160°C | - | - | 0.93 ± 0.07 |
| **Glasumwandlungs - temperatur T**_{**g**} | | 115°C | 145°C | **>210°C** |
| **Gelier- &** | | 5 h @ 130 °C | 4 h @ 80°C | **4 h @ 65°C** |
| **Härtephase** | | + | + | **+** |
| | | 12 h @ 130°C | 16 h @ 160°C | **1 h @ max 150°C** |

Die gezielte Kombination von einem gestrafften Verarbeitungszyklus und der damit verbundenen sehr hohen Warmfestigkeit sowie der geeigneten Füllstoffauswahl ermöglicht die Herstellung von qualitativ hochwertigen Giessbauteilen in kürzeren Prozessintervallen. Dank geringerem Energieaufwand können zusätzlich Kosten eingespart werden. Eine intelligente Prozessführung und Füllstoffwahl ermöglicht trotz der relativ hohen Reaktivität des Materials die Herstellung von vorzugsweise dickwandigen Giessbauteilen. Die Haftung zu metallischen Substraten, insbesondere Aluminium, ist sehr gut.

### Beispiel 3: Beschichtung wärmesensitiver Substrate

Es besteht ein Bedarf für Beschichtungen, welche bei tiefen bis moderaten Temperaturen, bspw. bei Raumtemperatur oder maximal 150 °C, verarbeitet werden können und darüber hinaus eine Form- und Hitzebeständigkeiten von mindestens 280°C aufweisen.

Wärmebeständige Beschichtungen gemäss der vorliegenden Erfindung mit einem erfindungsgemässen Harzsystem eignen sich insbesondere für wärme- und/oder korrosionsempfindliche Substrate, wie Metalle, bpsw. Aluminum und Aluminiumlegierungen, keramische Werkstoffe, Glas, Naturstoffe biogischen Ursprungs und Polymere. Darüber hinaus können die Beschichtungen vorteilhafterweise in temperaturbelasteten Bauteilen des Maschinenbaus, des Metall-Leichtbaus, der Elektronik und der Elektrotechnik eingesetzt werden. Hierdurch können gegebenfalls höhere Betriebstemperaturen erzielt werden bei unverändert hohem Schutz der Substrate und Bauteile.

**Tabelle 10**

| zeigt die Zusammensetzung für eine besonders bevorzugte Ausführungsform der erfindungsgemässen Beschichtung, die auf ein Aluminium-Substrat aufgetragen wurde: | |
|---|---|
| **Komponente** | **Gewichtsteile (GT)** |
| MY721 Harz | 6.25 |
| Maleinsäureanhydrid (MA) | 3 |
| Pyromellithsäuredianhydrid (PYRO) | 2 |
| Aceton | 5.63 |
| Aerosil 200 Thixotropisches Mittel | 0.34 |

Nach Auftragen der Beschichtung wird das System bei Raumtemperatur für 24 Stunden vernetzt und gehärtet und bei einer Temperatur von 90°C 1 Stunde nachgehärtet. Die derartig erhaltene Beschichtung hat eine Dicke von 150 µm und weist eine Form - und Hitzebeständigkeit von bis zu 300°C auf. Darüber hinaus weist die erhaltene Beschichtung eine Glastemperatur von 270°C auf, besitzt eine sehr gute Adhäsion zum Aluminium-Substrat und weist keinerlei Beschädigungen auf.

In dieser bevorzugten Ausführungsform der vorliegenden Erfindung wird ein Lösungsmittel verwendet. Durch Verwendung von Lösungsmitteln, wie bspw Aceton, MEK, DMF, DMSO, DMAc und NMP, werden homogene Lösungen mit einem sehr hohen Feststoffanteil, im allgemeinen bis zu einem Feststoffanteil von 70% erhalten. Bevorzugterweise werden Beschichtungen, die Lösungsmittel enthalten, nach dem Mischen der Komponenten für 24 Stunden bei einer Temperatur unter 10°C gelagert. Dies gewährleistet, dass eine vollständige Auflösung aller Komponenten erzielt wird, ohne dass negative Einflüsse auf Verarbeitungseigenschaften der Beschichtung, wie bspw. auf die Lösungsviskosität resultieren.

Die Beschichtung wird in der dem Fachmann bekannten Weise auf die Oberfläche des wärmeempfindlichen Substrates auftgetragen, bspw. durch Sprühen. Falls die Beschichtung unter Verwendung eines Lösungsmittels hergestellt wurde, verdampft dieses im Verlauf der Härtung. Das in Tabelle 10 beschriebene Ausführungsbeispiel enthält desweiteren ein thixotropisches Mittel, welches insbesondere bei Anwendung der erfindungsgemässen Beschichtung auf geneigten oder schiefen Oberflächen hinzugefügt wird.

Obwohl hier bevorzugte Ausführungsformen und Ausführungsbeispiele der Erfindung beschrieben wurden, ist es für Fachleute auf dem Gebiet der Erfindung naheliegend, dass Veränderungen und Modifikationen der beschriebenen Ausführungsformen und Ausführungsbeispiele durchgeführt werden können, ohne sich vom Wesen und Zweck der Erfindung zu entfernen.

## Patentansprüche

1. Harzsystem mit mindestens zwei getrennt lagerfähigen und miteinander bei Raumtemperatur vernetzbaren Komponenten, **dadurch gekennzeichnet, dass** die erste Komponente mindestens eine Verbindung der Formel (I) enthält, 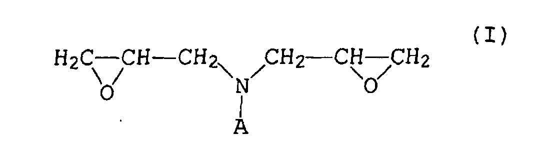 in der A ein gegebenenfalls substituierter aromatischer Rest ist,
und die zweite Komponente mindestens zwei unterschiedliche cyclische Anhydride einer organischen Säure enthält, wobei die zweite Komponente über 50 Gew-% Maleinsäureanhydrid (MA) enthält, und wobei die zweite Komponente mindestens eine der folgenden Substanzen enthält, gewählt aus Benzol-1,2,4,5-tetracarbonsäuredianydrid (Pyromellithsäuredianhydrid, PYRO), Benzol-1,2,4-tricarbonsäureanhydrid (Trimellithsäureanhydrid, TRIM), 2-Sulfobenzoesäure-cycloanhydrid (SBA), Hexafluorpropyliden-2,2-bis-phthaläureanhydrid (6FDA), Naphthalin-1,4,5,8-tetracarbonsäuredianhydrid (NTCDA), cis-Cyclohexan-1,2-dicarbonsäureanhydrid (HHPA), 4-Methylcylohexan-1,2-dicarbonsäurenhydrid (MCHA), 1,4,5,6,7,7-Hexachloro-5-norbornen-2,3-dicarbonsäureanhydrid (HET), Phthalsäureanhydrid (PSA) und Methyl-5-norbornen-2,3-dicarbonsäureanhydrid (MNDA), mit der Massgabe, dass die Verbindung der Formel (I) keine Verbindung der Formel (II) 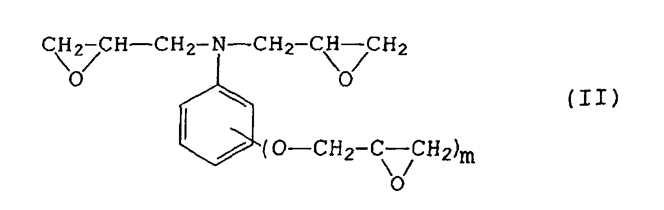 ist,
in der m = 1 oder 2 bedeutet,
wenn das cyclische Anhydrid eine Verbindung der Formel (III) 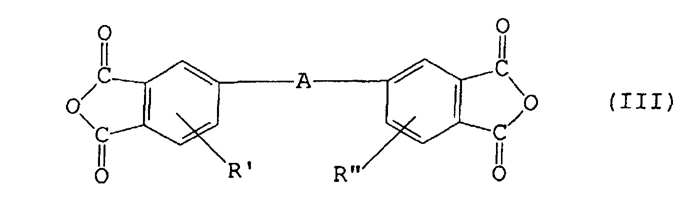 ist,
in der A ein Carbonylrest ist oder der Formel 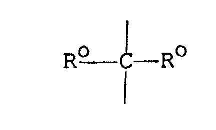 entspricht, in der jeder Rest R^{O} einzeln ein Wasserstoff- oder Halogenatom, Hydroxy- oder C₁-C₅-Alkyl- oder Alkoxyrest oder einen mit einer C₁- C₅-Alkylgruppe substituierten Oxocarbonylrest darstellt, und R' und R" unabhängig voneinander Wasserstoff- oder Halogenatome, C₁- C₅-Alkyl-, Nitro-, Carboxyl-, Sulfonyl- oder Aminogruppen bedeuten.

2. Harzsystem nach Anspruch 1, **dadurch gekennzeichnet, dass** die mindestens eine Verbindung der Formel (I) gewählt ist aus N,N,N',N'-Tetraglycidyl-4,4'diaminodiphenylmethan, N,N,N',N'-Tetraglycidyl-α,α'-bis(4-aminophenyl)-pdiisopropylbenzol, N,N,N',N'-Tetraglycidyl-α,α'-bis(3,5-dimethyl-4-aminophenyl)-pdiisopropylbenzol, N,N- Diglycidylanilin und O,N,N-Triglycidyl-4-aminophenol.

3. Harzsystem nach Anspruch 1 oder 2, **dadurch gekennzeichnet, dass** die erste Komponente mindestens zwei, vorzugsweise drei, unterschiedliche Verbindungen der Formel (I) enthält.

4. Harzsystem nach einem der Ansprüche 1 bis 3, **dadurch gekennzeichnet, dass** die erste Komponente O,N,N-Triglycidyl-4-aminophenol und N,N,N',N'-Tetraglycidyl-4,4'diaminodiphenylmethan enthält, und das Verhältnis der Epoxidäquivalente von O,N,N-Triglycidyl-4-aminophenol und N,N,N',N'-Tetraglycidyl-4,4'-diaminodiphenylmethan vorzugsweise in einem Bereich von 10:1 bis 1:10 liegt.

5. Harzsystem nach einem der Ansprüche 1 bis 4, **dadurch gekennzeichnet, dass** die erste Komponente O,N,N-Triglycidyl-4-aminophenol, N,N,N',N'-Tetraglycidyl-4,4'diaminodiphenylmethan und N,N-Diglycidylanilin enthält, und der prozentuale Molanteil von N,N-Diglycidylanilin bezogen auf die Summe der Molanteile von O,N,N-Triglycidyl-4-aminophenol, N,N,N',N'-Tetraglycidyl-4,4'-diaminodiphenylmethan und N,N-Diglycidylanilin vorzugsweise kleiner gleich 25 Mol-% ist.

6. Harzsystem nach einem der Ansprüche 1 bis 5, **dadurch gekennzeichnet, dass** das Harzsystem frei von Härtebeschleunigern ist.

7. Harzsystem nach einem der Ansprüche 1 bis 6, **dadurch gekennzeichnet, dass** die erste Komponente ausserdem mindestens ein Epoxid enthält, das gewählt ist aus der Gruppe der aliphatischen, cycloaliphatischen, aromatischen und heterocyclischen Epoxide, und vorzugsweise ein Epoxid ist, das aufgebaut ist aus mehrwertigen Phenolen, Epoxidierungsprodukte von Kresol-Novolaken und/oder Phenol-Novolaken, Hydantoin-Epoxide, Polyglycidylether, cycloaliphatischen Epoxide, Glycidyletherverbindungen eines mehrwertigen Phenols auf Basis von Bisphenol A, F und/oder S, 1,4-Bis-(hydroxymethyl)-cyclohexan-bis(2,3-epoxy-propylether), 4-Cyclohexen-1,2-dicarbonsäure-bis-(2,3-epoxypropylester), Cyclohexan-1,2-dicarbonsäure-bis-(2,3-epoxy-propylester), 3,4-Epoxycyclohexancarbonsäure-(3,4-epoxy-cyclohexylmethyl-ester) oder 4-Vinyl-1-cyclohexendiepoxid, und wobei vorzugsweise der Molanteil des mindestens einen Epoxides bezogen auf die erste Komponente zwischen 1 Mol-% und 75 Mol-%, vorzugsweise zwischen 10 und 50 Mol-% liegt.

8. Harzsystem nach einem der Ansprüche 1 bis 7, **dadurch gekennzeichnet, dass** es zusätzlich mindestens ein Lacton in einer Konzentration von 0,1 bis 1,5 Mol pro Epoxidäquivalent der ersten Komponente enthält.

9. Harzsystem nach einem der Ansprüche 1 bis 8, **dadurch gekennzeichnet, dass** es mindestens einen teilchenförmigen und/oder faserförmigen Füllstoff als dritte Komponente enthält.

10. Harzsystem nach einem der Ansprüche 1 bis 9, **dadurch gekennzeichnet, dass** das Harzsystem mindestens eine vierte Komponente enthält, die gewählt ist aus mindestens einem Plastifizierungsmittel, Elastifizierungsmittel, Streckmittel, Flammschutzmittel und mindestens einer Verstärkungsfaser.

11. Harzsystem nach einem der Ansprüche 1 bis 10, **dadurch gekennzeichnet, daß** die zweite Komponente über 60 Gew.-% Maleinsäureanhydrid (MA) enthält.

12. Harzsystem nach einem der Ansprüche 1 bis 11, **dadurch gekennzeichnet, daß** die zweite Komponente mindestens eine der folgenden Substanzen enthält, gewählt aus 3,3',4,4'-Biphenyl-tetracarbonsäure-dianhydrid (s-BPDA), 4,4'-Oxy-di-phtalsäureanhydrid (OPDA), 3,3',4,4'-Diphenylsulfon-tetracarbonsäure-dianhydrid (DSDA), 5-(2,5-Dioxotetrahydrol)-3-methyl-3-cyclohexan-1,2-dicarbonsäureanhydrid, 3α,4,7,7α-Tetrahydro-4,5-dimethyl-7-(2-methyl-2-propenyl)-1,3-isobenzofurandion, Hexahydro-4-methyl-7-(1-methylethyl)-4,7-ethnoisobenzofuran-1,3-dione und halogenierte aromatische cyclische Anhydride.

13. Harzsystem nach einem der Ansprüche 1 bis 12, **dadurch gekennzeichnet, daß** das Verhältnis des Epoxidäquivalentes der ersten Komponente zum Anhydridäquivalent der zweiten Komponente im Bereich von 1 : 0,2 - 1,2 liegt.

14. Verfahren zur Herstellung eines isolierten elektrischen Leiters dessen Isolation mindestens teilweise aus einem vemetzten Epoxyharz besteht, **dadurch gekennzeichnet, dass** man zur Herstellung des vemetzten Epoxyharzes ein Harzsystem verwendet, das mindestens zwei getrennt lagerfähige und miteinander bei Raumtemperatur, vorzugsweise ohne Verwendung eines Härtungsbeschleunigers, vernetzbare Komponenten enthält, wobei die erste Komponente mindestens eine Verbindung der Formel (I) enthält, 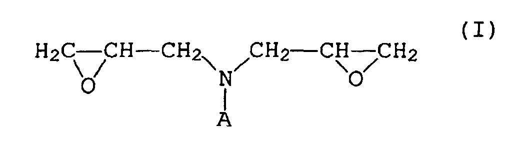 in der A ein gegebenenfalls substituierter aromatischer Rest ist,
und die zweite Komponente mindestens zwei unterschiedliche cyclische Anhydride einer organischen Säure enthält, wobei die zweite Komponente über 50 Gew-% Maleinsäureanhydrid (MA) enthält, und wobei die zweite Komponente mindestens eine der folgenden Substanzen enthält, gewählt aus Benzol-1,2,4,5-tetracarbonsäuredianydrid (Pyromellithsäuredianhydrid, PYRO), Benzol-1,2,4-tricarbonsäureanhydrid (Trimellithsäureanhydrid, TRIM), 2-Sulfobenzoesäure-cycloanhydrid (SBA), Hexafluorpropyliden-2,2-bis-phthaläureanhydrid (6FDA), Naphthalin-1,4,5,8-tetracarbonsäuredianhydrid (NTCDA), cis-Cyclohexan-1,2-dicarbonsäureanhydrid (HHPA), 4-Methylcylohexan-1,2-dicarbonsäurenhydrid (MCHA), 1,4,5,6,7,7-Hexachloro-5-norbornen-2,3-dicarbonsäureanhydrid (HET), Phthalsäureanhydrid (PSA) und Methyl-5-norbornen-2,3-dicarbonsäureanhydrid (MNDA), mit der Massgabe, dass die Verbindung der Formel (I) keine Verbindung der Formel (II) 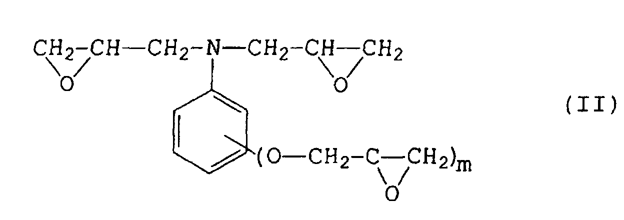 ist,
in der m = 1 oder 2 bedeutet,
wenn das cyclische Anhydrid eine Verbindung der Formel (III) 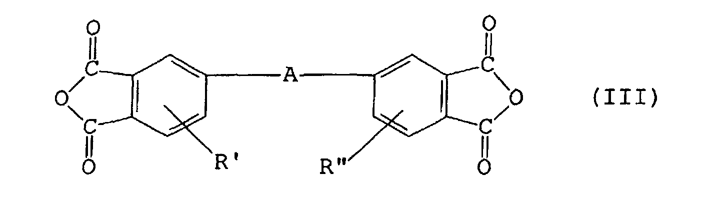 ist,
in der A ein Carbonylrest ist oder der Formel 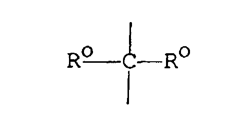 entspricht, in der jeder Rest R^{O} einzeln ein Wasserstoff- oder Halogenatom, Hydroxy- oder C₁-C₅-Alkyl- oder Alkoxyrest oder einen mit einer C₁- C₅-Alkylgruppe substituierten Oxocarbonylrest darstellt, und R' und R" unabhängig voneinander Wasserstoff- oder Halogenatome, C₁- C₅-Alkyl-, Nitro-, Carboxyl-, Sulfonyl- oder Aminogruppen bedeuten.

15. Verfahren nach Anspruch 14, **dadurch gekennzeichnet, daß** das Harzsystem bei Raumtemperatur in weniger als 24 Stunden vemetzt.

16. Verfahren nach Anspruch 14 oder 15, **dadurch gekennzeichnet, daß** eine allfällige Nachhärtung bei einer Temperatur von weniger als 120°C, bevorzugterweise zwischen 50°C und 100°C, und besonders bevorzugterweise zwischen 50°C und 90°C in weniger als 3 Stunden, vorzugsweise innerhalb 1 Stunde und 3 Stunden erfolgt.

17. Isolierter elektrischer Leiter hergestellt nach dem Verfahren gemäss einem der Ansprüche 14 bis 16.

18. Giessharzkörper, insbesondere elektrischer Isolator, mit einem Harzsystern gemäss einem der Ansprüche 1 bis 13.

19. Giessharzkörper nach Anspruch 18, **dadurch gekennzeichnet, dass** der Giessharzkörper ein Gussgewicht von 5 bis 500 kg, bevorzugt von 50 bis 500 kg, und besonders bevorzugt von 100 bis 500 kg hat.

20. Giessharzkörper nach Anspruch 18 oder 19, **dadurch gekennzeichnet, dass** das der Giessharzkörper mindestens ein Aktivelement aufweist, wobei bevorzugterweise das mindestens eine Aktivelement ausgewählt ist aus der Gruppe umfassend metallische Werkstoffe, leitfähige Kunststoffe und Compounds.

21. Beschichtung, insbesondere für ein wärmeempfindliches Substrat, mit einem Harzsystem gemäss einem der Ansprüche 1 bis 13.

## Claims

1. A resin system with at least two components which can be stored separately and crosslinked with one another at room temperature, **characterized in that** the first component comprises at least one compound of the formula (I) 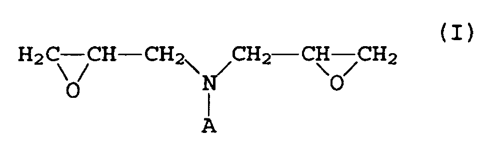 where A is an unsubstituted or substituted aromatic radical,
and the second component comprises at least two different cyclic anhydrides of an organic acid, where the second component comprises more than 50% by weight of maleic anhydride (MA) and where the second component comprises at least one of the following substances: benzene-1,2,4,5-tetracarboxylic dianhydride (pyromellitic dianhydride, PYRO), benzene-1,2,4-tricarboxylic anhydride (trimellitic anhydride, TRIM), 2-sulfobenzoic acid cycloanhydride (SBA), hexafluoropropylidene-2,2-bis(phthalic anhydride) (6FDA), naphthalene-1,4,5,8-tetracarboxylic dianhydride (NTCDA), cis-cyclohexane-1,2-dicarboxylic anhydride (HHPA), 4-methylcylohexane-1,2-dicarboxylic anhydride (MCHA), 1,4,5,6,7,7-hexachloro-5-norbornene-2,3-dicarboxylic anhydride (HET), phthalic anhydride (PA) and methyl-5-norbornene-2,3-dicarboxylic anhydride (MNDA), with the proviso that the compound of the formula (I) is not a compound of the formula (II) 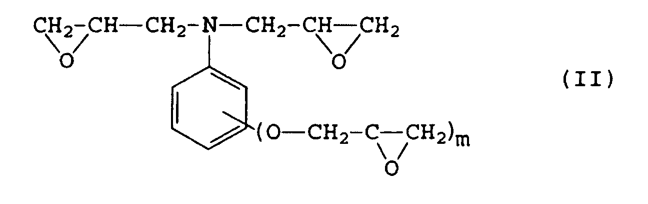 where m = 1 or 2,
if the cyclic anhydride is a compound of the formula (III) 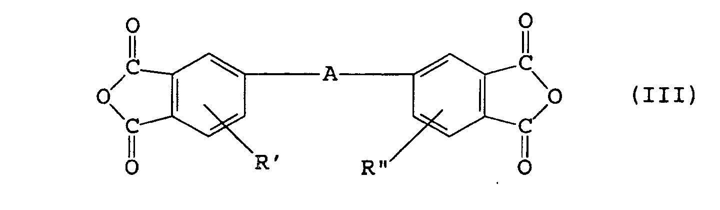 where A is a carbonyl radical, or has the formula 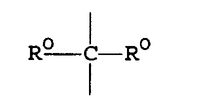 where each radical R^{O} is a hydrogen atom or halogen atom, a hydroxyl radical or a C₁-C₅-alkyl radical or an alkoxy radical, or a C₁-C₅-alkyl-substituted oxycarbonyl radical, and R' and R", independently of one another, are hydrogen atoms or halogen atoms, C₁-C₅-alkyl groups, nitro groups, carboxyl groups, sulfonyl groups or amino groups.

2. The resin system as claimed in claim 1, **characterized in that** the at least one compound of the formula (1) has been selected from N,N,N',N'-tetraglycidyl-4,4'-di-aminodiphenylmethane, N,N,N',N'-tetraglycidyl-α,α'-bis(4-aminophenyl)-p-diisopropylbenzene, N,N,N',N'-tetraglycidyl-α,α'-bis(3,5-dimethyl-4-aminophenyl)-p-diisopropylbenzene, N,N-diglycidylaniline and O,N,N-triglycidyl-4-aminophenol.

3. The resin system as claimed in claim 1 or 2, **characterized in that** the first component comprises at least two, preferably three, different compounds of the formula (I).

4. The resin system as claimed in any of claims 1 to 3, **characterized in that** the first component comprises O,N,N-triglycidyl-4-aminophenol and N,N,N',N'-tetraglycidyl-4,4'-diaminodiphenylmethane, and the ratio of the epoxy equivalents of O,N,N-triglycidyl-4-aminophenol and N,N,N',N'-tetraglycidyl-4,4'-diaminodiphenylmethane is preferably within the range from 10:1 to 1:10.

5. The resin system as claimed in any of claims 1 to 4, **characterized in that** the first component comprises O,N,N-triglycidyl-4-aminophenol, N,N,N',N'-tetraglycidyl-4,4'-diaminodiphenylmethane and N,N-diglycidylaniline, and the percentage molar proportion of N,N-diglycidylaniline, based on the total of the molar proportions of O,N,N-triglycidyl-4-aminophenol, N,N,N',N'-tetraglycidyl-4,4'-diaminodiphenylmethane and N,N-diglycidylaniline, is preferably less than or equal to 25 mol%.

6. The resin system as claimed in any of claims 1 to 5, **characterized in that** the resin system is free from curing accelerators.

7. The resin system as claimed in any of claims 1 to 6, **characterized in that** the first component also comprises at least one epoxide selected from the group consisting of aliphatic, cycloaliphatic, aromatic and heterocyclic epoxides, and is preferably an epoxide built up from polyhydric phenols, or is epoxidation products of cresol novolaks and/or of phenol novolaks, or is hydantoin epoxides, polyglycidyl ethers, cycloaliphatic epoxides, glycidyl ether compounds of a polyhydric phenol based on bisphenol A, F and/or S, or is the bis(2,3-epoxypropyl) ether of 1,4-bis(hydroxymethyl)cyclohexane, the bis(2,3-epoxypropyl) ester of 4-cyclohexene-1,2-dicarboxylic acid, the bis(2,3-epoxypropyl) ester of cyclohexane-1,2-dicarboxylic acid, the 3,4-epoxycyclohexylmethyl ester of 3,4-epoxycyclohexanecarboxylic acid, or is 4-vinyl-1-cyclohexene diepoxide, the molar proportion of the at least one epoxide, based on the first component, being from 1 to 75 mol%, preferably from 10 to 50 mol%.

8. The resin system as claimed in any of claims 1 to 7, **characterized in that** it also comprises at least one lactone at a concentration of from 0.1 to 1.5 mol per epoxy equivalent of the first component.

9. The resin system as claimed in any of claims 1 to 8, **characterized in that** it comprises at least one particulate and/or fibrous filler as third component.

10. The resin system as claimed in any of claims 1 to 9, **characterized in that** the resin system comprises at least one fourth component selected from at least one plasticizer, elasticizer, extender, and flame retardant, and at least one reinforcing fiber.

11. The resin system as claimed in any of claims 1 to 10, **characterized in that** the second component comprises more than 60% by weight of maleic anhydride (MA).

12. The resin system as claimed in any of claims 1 to 11, **characterized in that** the second component comprises at least one of the following substances: 3,3',4,4'-biphenyltetracarboxylic dianhydride (s-BPDA), 4,4'-oxybis(phthalic anhydride) (OPDA), 3,3',4,4'-diphenyl sulfone tetracarboxylic dianhydride (DSDA), 5-(2,5-dioxotetrahydrol)-3-methyl-3-cyclohexane-1,2-dicarboxylic anhydride, 3α,4,7,7α-tetrahydro-4,5-dimethyl-7-(2-methyl-2-propenyl)-1,3-isobenzofurandione, hexahydro-4-methyl-7-(1-methylethyl)-4,7-ethnoisobenzofuran-1,3-diones and halogenated aromatic cyclic anhydrides.

13. The resin system as claimed in any of claims 1 to 12, **characterized in that** the ratio of the epoxy equivalent of the first component to the anhydride equivalent of the second component is within the range 1:0.2-1.2.

14. A process for producing an insulated electrical conductor whose insulation is composed at least to some extent of a crosslinked epoxy resin, **characterized in that**, to prepare the crosslinked epoxy resin, a resin system is used which comprises at least two components which can be stored separately and crosslinked with one another at room temperature, preferably without using a curing accelerator, where the first component comprises at least one compound of the formula (I) 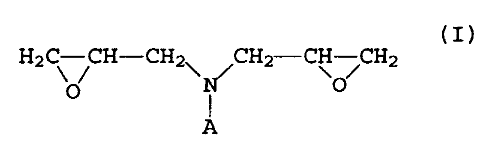 where A is an unsubstituted or substituted aromatic radical,
and the second component comprises at least two different cyclic anhydrides of an organic acid, where the second component comprises more than 50% by weight of maleic anhydride (MA) and where the second component comprises at least one of the following substances: benzene-1,2,4,5-tetracarboxylic dianhydride (pyromellitic dianhydride, PYRO), benzene-1,2,4-tricarboxylic anhydride (trimellitic anhydride, TRIM), 2-sulfobenzoic acid cycloanhydride (SBA), hexafluoropropylidene-2,2-bis(phthalic anhydride) (6FDA), naphthalene-1,4,5,8-tetracarboxylic dianhydride (NTCDA), cis-cyclohexane-1,2-dicarboxylic anhydride (HHPA), 4-methylcylohexane-1,2-dicarboxylic anhydride (MCHA), 1,4,5,6,7,7-hexachloro-5-norbornene-2,3-dicarboxylic anhydride (HET), phthalic anhydride (PA) and methyl-5-norbomene-2,3-dicarboxylic anhydride (MNDA), with the proviso that the compound of the formula (I) is not a compound of the formula (II) 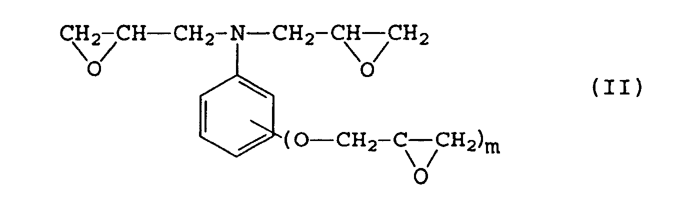 where m = 1 or 2,
if the cyclic anhydride is a compound of the formula (III) 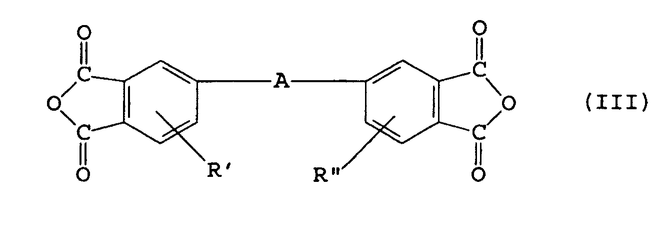 where A is a carbonyl radical, or has the formula 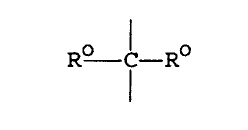 where each radical R^{O} is a hydrogen atom or halogen atom, a hydroxyl radical or a C₁-C₅-alkyl radical or an alkoxy radical, or a C₁-C₅-alkyl-substituted oxycarbonyl radical, and R' and R", independently of one another, are hydrogen atoms or halogen atoms, C₁-C₅-alkyl groups, nitro groups, carboxyl groups, sulfonyl groups or amino groups.

15. The process as claimed in claim 14, **characterized in that** the resin system crosslinks in less than 24 hours at room temperature.

16. The process as claimed in claim 14 or 15, **characterized in that** any possible postcuring takes place in less than 3 hours, preferably between 1 hour and 3 hours, at a temperature below 120°C, preferably from 50 to 100°C, and particularly preferably from 50 to 90°C.

17. An insulated electrical conductor produced by the process as claimed in any of claims 14 to 16.

18. A cast resin article, in particular an electrical insulator, with a resin system as claimed in any of claims 1 to 13.

19. The cast resin article as claimed in claim 18, **characterized in that** the cast resin article has a casting weight of from 5 to 500 kg, preferably from 50 to 500 kg, and particularly preferably from 100 to 500 kg.

20. The cast resin article as claimed in claim 18 or 19, **characterized in that** the cast resin article has at least one active element, the at least one active element preferably being selected from the group consisting of metallic materials and conductive plastics and compounds.

21. A coating, in particular for a heat-sensitive substrate, with a resin system as claimed in any of claims 1 to 13.

## Revendications

1. Système de résine comportant au moins deux composants stables à l'entreposage et réticulables entre eux à température ambiante, **caractérisé en ce que** le premier composant contient au moins un composé de la formule (I), 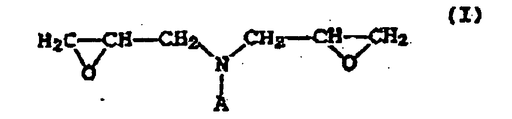 dans laquelle A est un reste aromatique éventuellement substitué,
et le deuxième composant contient au moins deux anhydrides cycliques différents d'un acide organique, le deuxième composant contenant plus de 50% en poids d'anhydride maléique (MA), et le deuxième composant contenant au moins l'une des substances suivantes, choisie parmi du dianhydride d'acide benzène-1,2,4,5-tétracarboxylique (anhydride de l'acide pyromellitique, PYRO), de l'anhydride d'acide benzène-1,2,4-tricarboxylique (anhydride de l'acide trimellitique, TRIM), de l'anhydride cyclique d'acide 2-sulfobenzoïque (SBA), de l'anhydride d'acide hexafluoropropylidène-2,2-bis-phtalique (6FDA), du dianhydride d'acide naphtalène-1,4,5,8-tétracarboxylique (NTCDA), de l'anhydride d'acide cis-cyclohexane-1,2-dicarboxylique (HHPA), de l'anhydride d'acide 4-méthylcyclohexane-1,2-dicarboxylique (MCHA), de l'anhydride d'acide 1,4,5,6,7,7-hexachloro-5-norbornène-2,3-dicarboxylique (HET), de l'anhydride d'acide phtalique (PSA) et de l'anhydride d'acide méthyl-5-norbornène-dicarboxylique (MNDA), avec la condition que le composé de formule (I) ne soit pas un composé de la formule (II), 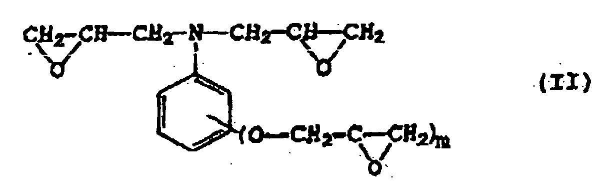 dans laquelle m = 1 ou 2,
lorsque l'anhydride cyclique est un composé de la formule (III) 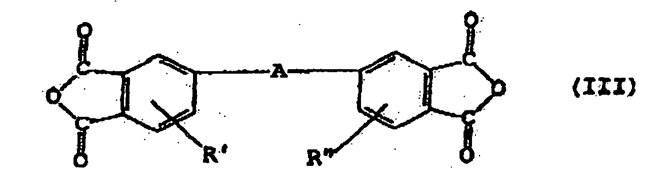 dans laquelle A est un reste carbonyle ou répond à la formule 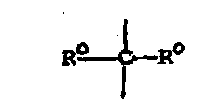 dans laquelle chaque reste R^{O} représente individuellement de l'hydrogène ou un halogène, un reste hydroxy ou alkyle en C₁ à C₅ ou alcoxy, ou un reste oxocarbonyle substitué par un groupe alkyle en C₁ à C₅, et R' et R" représentent indépendamment l'un de l'autre des atomes d'hydrogène ou d'halogène, ou des groupes alkyle en C₁ à C₅, nitro, carboxyle, sulfonyle ou amino.

2. Système de résine selon la revendication 1, **caractérisé en ce que** le au moins un composé de formule (I) est choisi parmi du N,N,N',N'-tétraglycidyl-4,4'-diaminodiphénylméthane, du N,N,N',N'-tétraglycidyl-α,α'-bis(4-aminophényl)-p-diisopropylbenzène, du N,N,N',N'-tétraglycidyl-α-α'-bis(3,5-diméthyl-4-aminophényl)-p-diisopropylbenzène, de la N,N-diglycidylaniline et du O,N,N-triglycidyl-4-aminophénol.

3. Système de résine selon la revendication 1 ou 2, **caractérisé en ce que** le premier composant contient au moins deux, de préférence trois composés différents de formule (I).

4. Système de résine selon l'une quelconque des revendications 1 à 3, **caractérisé en ce que** le premier composant contient du O,N,N-triglycidyl-4-aminophénol et du N,N,N',N'-tétraglycidyl-4,4'-diaminodiphénylméthane, et que la proportion des équivalents époxyde du O,N,N-triglycidyl-4-aminophénol et du N,N,N',N'-tétraglycidyl-4,4'-diaminodiphénylméthane est de préférence de l'ordre de 10:1 à 1:10.

5. Système de résine selon l'une quelconque des revendications 1 à 4, **caractérisé en ce que** le premier composant contient du O,N,N-triglycidyl-4-aminophénol, du N,N,N',N'-tétraglycidyl-4,4'-diaminodiphénylméthane et de la N,N-diglycidylaniline et que la fraction molaire en pourcentage de la N,N-diglycidylaniline, par rapport à la somme des fractions molaires de O,N,N-triglycidyl-4-aminophénol, de N,N,N',N'-tétraglycidyl-4,4'-diaminodiphénylméthane et de N,N-diglycidylaniline est de préférence inférieure ou égale à 25% molaires.

6. Système de résine selon l'une quelconque des revendications 1 à 5, **caractérisé en ce que** le système de résine est exempt d'accélérateurs de durcissement.

7. Système de résine selon l'une quelconque des revendications 1 à 6, **caractérisé en ce que** le premier composant contient en outre au moins un époxyde, choisi dans le groupe formé par les époxydes aliphatiques, cycloaliphatiques, aromatiques et hétérocycliques, et est de préférence un époxyde formé à partir de phénols polyvalents, de produits d'époxydation de novolaques de crésol et/ou de novolaques de phénol, d'époxydes d'hydantoïne, de poly(éther glycidylique), d'époxydes cycloaliphatiques, de composés d'éther glycidylique d'un phénol polyvalent à base de bisphénol A, F et/ou S, d'éther 1,4-bis-(hydroxyméthyl)cyclohexane-bis(2,3-époxypropylique), d'ester bis-(2,3-époxypropylique) d'acide 4-cyclohexén-1,2-dicarboxylique, d'ester bis-(2,3-époxypropylique) d'acide cyclohexane-1,2-dicarboxylique, d'ester bis-(3,4-époxy-cyclohexylméthylique) d'acide 3,4-(époxycyclohexane-carboxylique) ou de diépoxyde de 4-vinyl-1-cyclohexène, et où la fraction molaire au moins un époxyde, par rapport au premier composant, se situe entre 1% molaire et 75% molaires, de préférence entre 10 et 50% molaires.

8. Système de résine selon l'une quelconque des revendications 1 à 7, **caractérisé en ce qu'**il contient en outre au moins une lactone en une concentration de 0,1 à 1,5 mole par équivalent d'époxyde du premier composant.

9. Système de résine selon l'une quelconque des revendications 1 à 8, **caractérisé en ce qu'**il contient au moins une charge particulaire et/ou fibreuse en tant que troisième composant.

10. Système de résine selon l'une quelconque des revendications 1 à 9, **caractérisé en ce que** le système de résine contient au moins un quatrième composant, choisi parmi au moins un agent plastifiant, un agent d'élastification, un agent de dilution, un agent d'ignifugation et au moins une fibre de renforcement.

11. Système de résine selon l'une quelconque des revendications 1 à 10, **caractérisé en ce que** le deuxième composant contient plus de 60% en poids d'anhydride maléique (MA).

12. Système de résine selon l'une quelconque des revendications 1 à 11, **caractérisé en ce que** le deuxième composant contient au moins l'une des substances suivantes, choisie parmi du dianhydride d'acide 3,3',4,4'-biphényl-tétracarboxylique (s-BDPA), de l'anhydride d'acide 4,4'-oxy-diphtalique (OPDA), du dianhydride d'acide 3,3', 4,4'-diphénylsulfontétracarboxylique (DSDA), de l'anhydride d'acide 5-(2,5-dioxotétrahydrol)-3-méthyl-3-cyclohexane-1,2-dicarboxylique, de la 3α,4,7,7α-tétrahydro-4,5-diméthyl-7-(2-méthyl-2-propényl)-1,3-isobenzofuranedione, de la hexahydro-4-méthyl-7-(1-méthyléthyl)-4,7-éthanoisobenzofurane-1,3-dione et des anhydrides cycliques aromatiques halogénés.

13. Système de résine selon l'une des revendications 1 à 12, **caractérisé en ce que** la proportion de l'équivalent d'époxyde du premier composant vis-à-vis de l'équivalent d'anhydride du deuxième composant est de l'ordre de 1 : 0,2 - 1,2.

14. Procédé de préparation d'un conducteur électrique isolé dont l'isolation est au moins en partie constituée d'une résine époxy réticulée, **caractérisé en ce que** l'on utilise pour la préparation de la résine époxy réticulée un système de résine contenant au moins deux composants stables à l'entreposage et réticulables entre eux à température ambiante, de préférence sans utilisation d'un accélérateur de durcissement, où le premier composant contient au moins un composé de formule (I) 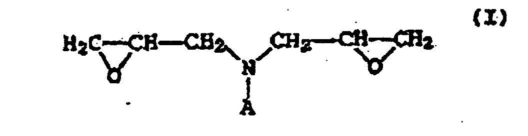 dans laquelle A est un reste aromatique éventuellement substitué,
et le deuxième composant contient au moins deux anhydrides cycliques différents d'un acide organique, le deuxième composant contenant plus de 50% en poids d'anhydride maléique (MA), et le deuxième composant contenant au moins l'une des substances suivantes, choisie parmi du dianhydride d'acide benzène-1,2,4,5-tétracarboxylique (anhydride de l'acide pyromellitique, PYRO), de l'anhydride d'acide benzène-1,2,4-tricarboxylique (anhydride de l'acide trimellitique, TRIM), de l'anhydride cyclique d'acide 2-sulfobenzoïque (SBA), de l'anhydride d'acide hexafluoropropylidène-2,2-bis-phtalique (6FDA), du dianhydride d'acide naphtalène-1,4,5,8-tétracarboxylique (NTCDA), de l'anhydride d'acide cis-cyclohexane-1,2-dicarboxylique (HHPA), de l'anhydride d'acide 4-méthylcyclohexane-1,2-dicarboxylique (MCHA), de l'anhydride d'acide 1,4,5,6,7,7-hexachloro-5-norbornène-2,3-dicarboxylique (HET), de l'anhydride d'acide phtalique (PSA) et de l'anhydride d'acide méthyl-5-norbornène-2,3-dicarboxylique (MNDA), avec la condition que le composé de formule (I) ne soit pas un composé de la formule (II) , 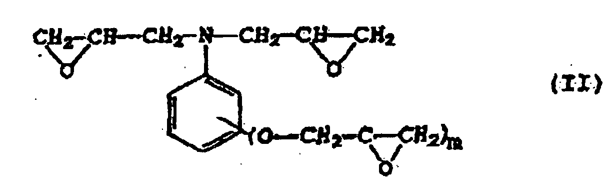 dans laquelle m = 1 ou 2,
lorsque l'anhydride cyclique est un composé de la formule (III) 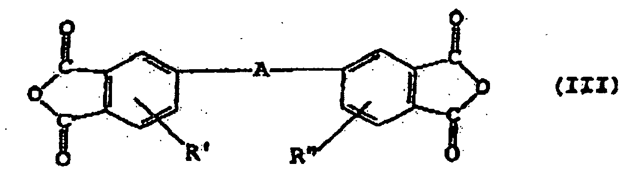 dans laquelle A est un reste carbonyle ou répond à la f ormule 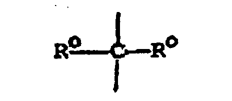 dans laquelle chaque reste R^{o} représente individuellement de l'hydrogène ou un halogène, un reste hydroxy ou alkyle en C₁ à C₅ ou alcoxy, ou un reste oxocarbonyle substitué par un groupe alkyle en C₁ à C₅, et R' et R" représentent indépendamment l'un de l'autre des atomes d'hydrogène ou d'halogène, ou des groupes alkyle en C₁ à C₅, nitro, carboxyle, sulfonyle ou amino.

15. Procédé selon la revendication 14,
**caractérisé en ce que** le système de résine se réticule à température ambiante en moins de 24 h.

16. Procédé selon la revendication 14 ou 15, **caractérisé en ce qu'**il se produit dans tous les cas un post-durcissement à une température de moins de 120°C, de préférence entre 50°C et 100°C, et de manière plus préférentielle entre 50°C et 90°C en moins de 3 h, de préférence en l'espace de 1 h et 3 h.

17. Conducteur isolé fabriqué par le procédé selon l'une quelconque des revendications 14 à 16.

18. Corps moulé en résine, en particulier un isolateur électrique, comportant un système de résine selon l'une quelconque des revendications 1 à 13.

19. Corps moulé en résine selon la revendication 18, **caractérisé en ce que** le corps moulé en résine a un poids de moulage de 5 à 500 kg, de préférence de 50 à 500 kg, et plus préférentiellement de 100 à 500 kg.

20. Corps moulé en résine selon la revendication 18 ou 19, **caractérisé en ce que** le corps moulé présente au moins un élément actif, où le au moins un élément actif est choisi dans le groupe comprenant des matériaux métallisés, des plastiques conducteurs et des compounds.

21. Revêtement, en particulier pour un substrat thermosensible, comportant un système de résine selon l'une quelconque des revendications 1 à 13.
